Europäisches Patentamt

European Patent Office

Office européen des brevets

(19)

(11) Veröffentlichungsnummer: **0 059 011**
**B1**

(12) ## EUROPÄISCHE PATENTSCHRIFT

(45) Veröffentlichungstag der Patentschrift:
18.04.84

(21) Anmeldenummer: 82200134.3

(22) Anmeldetag: 04.02.82

(51) Int. Cl.³: **A 01 N 61/02,** A 01 N 47/30 //
(A01N61/02, 47/30,
37/48),(A01N47/30, 37/48)

(54) **Mittel zum Entblättern von Kulturpflanzen und Verwendung des Mittels.**

(30) Priorität: 19.02.81 CH 1101/81

(43) Veröffentlichungstag der Anmeldung:
01.09.82 Patentblatt 82/35

(45) Bekanntmachung des Hinweises auf die Patenterteilung:
18.04.84 Patentblatt 84/16

(84) Benannte Vertragsstaaten:
AT BE DE FR GB IT NL SE

(56) Entgegenhaltungen:
FR - A - 2 206 906
US - A - 4 192 668

(73) Patentinhaber: SIEGFRIED AKTIENGESELLSCHAFT,
CH-4800 Zofingen (CH)

(72) Erfinder: Meyer, Jacques, Obere Brühlstrasse 1,
CH-4800 Zofingen (CH)
Erfinder: Schären, Walter, Lärchenfeld 440,
CH-4803 Vordemwald (CH)

(74) Vertreter: Ritscher, Thomas, Dr. et al, RITSCHER &
SEIFERT Auf der Mauer 4, CH-8001 Zürich (CH)

## Mittel zum Entblättern von Kulturpflanzen und Verwendung des Mittels

Die Erfindung betrifft ein Mittel zum Entblättern von Kulturpflanzen, welches insbesondere auch zum Abbrennen von Kartoffelstauden geeignet ist.

Von Entblätterungsmitteln macht die Landwirtschaft Gebrauch, um unerwünscht starker Laubblattentwicklung entgegenzuwirken und um das durch den Vegetationszyklus bedingte Absterben bzw. Abwelken und Eintrocknen von krautigen Pflanzenteilen, insbesondere der Laubblätter frühzeitig einzuleiten und zu beschleunigen, was sowohl für das Ausreifen der zu erntenden Produkte als auch für den Einsatz von Erntemaschinen vorteilhaft sein kann.

Wirtschaftliche Bedeutung haben Entblätterungsmittel in Mitteleuropa hauptsächlich beim Kartoffelanbau erlangt. Mit der Kartoffelernte wird begonnen, wenn gegen Ende der Vegetationsperiode Blätter und oberirdische Sprossteile abgedorrt sind. Eine Verzögerung dieses Vorganges durch Anomalien des jahreszeitlichen Witterungsablaufs führt zur Gefahr, dass die Ernte durch Einbruch nasskalten Herbstwetters erschwert oder verunmöglicht wird. Durch sogenanntes «Abbrennen» der Kartoffelstauden unter Verwendung von Entblätterungsmitteln kann der Vegetationsabschluss unabhängig von der Witterung eingeleitet werden. Gemäss US-A-4.192.668 können Mineralöle als Entblätterungsmittel verwendet werden.

Von den Behörden zugelassen und in der Praxis in grossem Umfang angewendet werden hierfür zur Zeit Präparate, welche als Aktivsubstanzen entweder 4,6-Dinitro-o-kresol («DNOC») oder 2-sec-Butyl-4,6-dinitrophenol (freie Kurzbezeichnung «Dinoseb») oder 1,1'-Ethylen-2,2'-bipyridylium-Salze (freie Kurzbezeichnung «Diquat») enthalten.

Es liegt auf der Hand, dass für Wahl und behördliche Genehmigung solcher Aktivstoffe deren Wirksamkeit als solche nicht allein massgeblich sein kann, sondern dass im Gegenteil die Toxizität der in Betracht gezogenen Substanzen, ihr allfälliger Einfluss auf die Umwelt, Abbaumechanismen und Tendenz zur Bildung von Rückständen im Boden, die Auswirkung auf Folgekulturen sowie selbstverständlich die Auswirkungen auf die Qualität des Erntegutes als Auswahlkriterien im Vordergrund stehen müssen.

Diesen Kriterien werden die drei oben aufgezählten, im Gebrauch befindlichen Substanzen soweit gerecht, dass ihr Einsatz als verantwortbar gilt. Dies berechtigt indessen nicht zur Annahme, dass es sich dabei um völlig problemlose Stoffe handle. Zumindest sind sie für Personen, die damit umzugehen oder die entsprechenden Mittel anzuwenden haben, ausgesprochen lästig und nicht ganz risikolos; beispielsweise erzeugen DNOC und Dinoseb auf der Haut eine penetrante Gelbfärbung, und Diquat kann in konzentrierter Form zu Schädigungen der Fingernägel und anderweitigen Irritationen führen.

Es musste unter diesen Umständen lohnend erscheinen, nach Mitteln zu suchen, welche den zugelassenen und im Gebrauch befindlichen Präparaten bezüglich Wirksamkeit ebenbürtig sind, ohne mit deren Nachteilen behaftet zu sein.

Die vorliegende Erfindung besteht nun darin, dass in der Tat ein Mittel gefunden werden konnte, welches nach dem gegenwärtigen Stand des Wissens diesen Anforderungen gerecht wird.

Das erfindungsgemässe Entblätterungsmittel ist dadurch gekennzeichnet, dass es Bifenox und Linuron in Kombination mit einem Mineralöl und an weiteren Hilfsstoffen vorzugsweise ein Emulgiermittel enthält.

Bifenox ist die u.a. von American National Standards Institute (ANSI) anerkannte freie Kurzbezeichnung (common name) für Methyl-5-(2,4-dichlorphenoxy)-2-nitrobenzoat, das ab 1970 als selektives Herbizid zur Verwendung gelangte.

Linuron ist die von zahlreichen Normierungsinstitutionen wie ANSI, BSI und ISO akzeptierte freie Kurzbezeichnung für 3-(3,4-Dichlorphenyl)-1-methoxy-1-methylharnstoff. Diese Substanz wird seit 1960 als selektives Herbizid für verschiedene Kulturen verwendet.

Unter Mineralölen im Sinne dieser Beschreibung sind die durch Raffinationsprozesse aus Erdöl gewonnenen Öle zu verstehen, welche unter der Bezeichnung «Weissöle» (white oils) u.a. auf dem Gebiet der Agrochemie zu verschiedenen Zwecken gebräuchlich sind.

Im Entblätterungsmittel der Erfindung kann die Menge der einzelnen Komponenten in vergleichsweise breitem Bereich variieren. Das Gewichtsverhältnis zwischen Bifonex und Linuron soll indessen zweckmässig in der Grössenordnung zwischen 1:6,25 und 6,25:1 und vorzugsweise zwischen 1:2,3 und 3,6:1 liegen. Das Mineralöl soll dagegen in einer Menge vorhanden sein, deren Volumen ausgedrückt in Liter, dem in Kilogramm ausgedrückten Gesamtgewicht von Bifenox und Linuron entspricht und bis zum 3, 5fachen desselben gehen kann. Als Emulgierungsmittel kommen die für agrochemische Erzeugnisse üblicherweise verwendeten Typen wie beispielsweise Fettsäurealkanolamine, Polyglykoläther und dgl. in Betracht. Daneben kann das Mittel weitere Zusatzstoffe enthalten, wie sie entsprechend der Formulierungsform und der beabsichtigten Anwendungsform üblich und dem Fachmann geläufig sind, namentlich Lösungsmittel, Tenside, Verdickungs-, Entschäumungsmittel und dgl.

Obschon das Mittel vorzugsweise eine fliessfähige, für den Gebrauch in Wasser aufzurührende Paste oder ein Emulsionskonzentrat sein soll, kann es im Prinzip in beliebiger Formulierung vorliegen. Da die Konzentration der Aktivstoffe ganz von der Formulierungsart abhängt, können bei der Definition des Entblätterungsmittels keine absoluten Zahlen für den Anteil der einzelnen Komponenten gemacht, sondern nur Verhältniszahlen genannt werden. Eine Orientierung über die einzusetzenden Mengen ergibt sich im folgenden bei den Ausführungen über die Verwendung des Mittels.

Die Erfindung umfasst nämlich auch die Verwendung des Entblätterungsmittels zum sogenannten Abbrennen von Kartoffelstauden. Zu diesem Zwecke wird das Mittel zweckmässig in solcher Menge mit Wasser verdünnt und so auf die zu behandelnde Kartoffelkultur versprüht, dass pro Hektar 0,4 bis 2,5 kg und vorzugsweise 0,44 bis 1,8 kg Bifenox, 0,4 bis 2,5 kg und vorzugsweise 0,5 bis 1 kg Linuron und 2 bis 4 Liter und vorzugsweise 2,8 bis 3,2 Liter Mineralöl ausgebracht werden.

Wie man zu diesem Resultat gelangt, soll am folgenden Herstellungs- und Verwendungsbeispiel dargestellt werden:

907 g Bifenox, technisches Produkt, Reinheit 97% und
526 g Linuron, technisches Produkt, Reinheit 95% werden zusammen in einer Hammermühle einem ersten Mahl- und Mischprozess unterworfen und dann in der Kugelmühle unter Zugabe von Wasser und den üblichen Hilfs- und Zusatzstoffen wie Tensiden, Verdickungs-, Entschäumungs- und Gefrierpunkterniedrigungsmitteln auf die erforderliche Feinheit vermahlen. Im resultierenden Gemisch werden anschliessend unter Zugabe von 250 g eines gemischt anionaktiven und nichtionigenen Emulgators (Produkt «Atlox 4853 B» der Atlas Chemical Industries N.V.) 3 Liter White Oil («Spray Oil 11E» der Firma Sun Oil) emulgiert, wobei man je nach der Menge des zuvor zugegebenen Wassers 6 bis 8 Liter Entblätterungsmittel in Form einer fliessfähigen Paste erhält.

Für die Verwendung wird aus der genannten Menge von 6 bis 8 Litern Paste zunächst durch Dispergieren in Wasser eine Spritzbrühe hergestellt. Die dazu erforderliche Wasser-Menge richtet sich nach dem Typ des Spritzgerätes, das benützt werden soll, und liegt zweckmässig in der Grössenordnung von 500 bis 1500 Litern. Die erhaltene Spritzbrühe wird dann zur Behandlung von 1 Hektar Kartoffel-Kulturfläche verwendet. Dies entspricht den folgenden Aufwandmengen der einzelnen Komponenten:

| Bifenox | 0,88 kg/ha |
| Linuron | 0,5 kg/ha |
| White Oil | 3 l/ha |

Vergleichende Feldversuche haben gezeigt, dass bei diesem Vorgehen, ja sogar noch bei Verminderung des Bifenox-Anteils auf die Hälfte (d.h. bei 0,44 kg/ha) Resultate erzielt werden, die denjenigen der Behandlung mit 8 kg/ha DNOC bzw. 1,65 kg/ha Diquat nach einer Einwirkungszeit von 15 Tagen absolut ebenbürtig sind. Die Wirkung tritt allerdings etwas langsamer ein als bei den Abbrennmitteln gemäss Stand der Technik. Dies braucht aber kein Nachteil zu sein, sondern bestätigt die Annahme, dass beim Mittel der Erfindung der Eingriff in die Lebensvorgänge der Pflanze auf mildere Weise erfolgt als bei bekannten Mitteln und dass aher auch mit einer geringeren Beeinflussung der Umwelt gerechnet werden darf.

Der langsamere Wirkungseintritt steht auch in Einklang mit der geringeren Toxizität der Komponenten des Mittels der Erfindung. Für die Beurteilung der Unbedenklichkeit einer zu agrochemischen Zwecken eingesetzten Substanz hat die im Tierversuch ermittelte akute Toxizität zwar nur beschränkte Aussagekraft. Zumindest Indizien für die Vorteile des erfindungsgemässen Mittels gegenüber dem Stand der Technik lassen sich dennoch ableiten, wenn man die der Literatur entnommenen Toxizitätswerte (DL50, p.o., Ratte) der verschiedenen Aktivstoffe einander gegenüberstellt:

| Bifenox | > 6400 mg/kg |
| Linuron | 4000 mg/kg |
| DNOC | 20–40 mg/kg |
| Dinoseb | 58 mg/kg |
| Diquat | 231 mg/kg |

Soweit die Resultate der bis dahin durchgeführten Versuche erkennen lassen, dürfte bei Verwendung des Mittels der Erfindung auch weder eine Qualitätsbeeinträchtigung der geernteten Kartoffeln noch ein Auftreten von Rückständen im Boden zu befürchten sein. Es darf daher erwartet werden, dass die Erfindung Möglichkeiten zur Durchführung von Entblätterungsaktionen eröffnet, bei welchen die Umwelt weniger beeinflusst wird als bisher. Dafür bestehen umso grössere Aussichten, als die Einzelkomponenten des Mittels ihre Bewährungsprobe als vergleichsweise unbedenkliche Herbizide bereits bestanden haben.

Es ist in diesem Zusammenhang jedoch zu betonen, dass sich die Einzelkomponenten Bifenox, Linuron oder Mineralöl je für sich weder zur Laubblätter-Reduktion oder -Eliminierung im allgemeinen noch zum Abbrennen von Kartoffelstauden im besonderen eignen. Die Wirkung des Mittels der Erfindung beruht eindeutig auf einem nicht voraussehbaren synergistischen Effekt. Von den Resultaten der Vergleichsversuche, welche diesen Nachweis erbrachten, seien hier lediglich einige Einzelwerte herausgegriffen:

In parallel geführten Versuchen führte die Anwendung von Bifenox als alleinigem Aktivstoff in einer Menge von 0,44 kg/ha zu einer 32,5%igen Beeinträchtigung der oberirdischen Kartoffel-Pflanzenteile, wogegen mit der gleichen Menge Bifenox unter Zusatz von 3 Liter Mineralöl, das lediglich eine Verbesserung von Verteilung und Resorption der Aktivstoffe bewirkt, bereits eine 85%ige Wirkung resultierte. Mit der vierfachen Menge Bifenox, aber ohne Mineralöl wurde dagegen eine 75%ige Wirkung beobachtet.

Ein ähnlicher Synergismus lässt sich auch in Bezug auf Bifenox und Linuron nachweisen. Linuron allein zeigt bei 0,5 kg/ha überhaupt keine Wirkung. Mit der gleichen Menge Linuron, aber unter Zusatz von Bifenox in einer Menge von 0,88 kg/ha wurde dagegen eine 65%ige Wirkung erzielt, die sich nicht weiter steigern liess, wenn in dieser Kombination die Bifenox-Menge auf den vierfachen Wert erhöht wurde.

**Patentansprüche**

1. Mittel zum Entblättern von Kulturpflanzen, dadurch gekennzeichnet, dass es als Komponenten (1) Methyl-5-(2,4-dichlorphenoxy)-2-nitrobenzoat und (2) 3-(3,4-Dichlorphenyl)-1-methoxy-1-methyl-harnstoff in Kombination mit (3) einem Mineralöl enthält.

2. Mittel nach Anspruch 1, dadurch gekennzeichnet, dass es als Hilfsstoff mindestens ein Emulgiermittel enthält.

3. Mittel nach Anspruch 1 oder 2, dadurch gekennzeichnet, dass es die Komponenten (1) und (2) in einem Gewichtsverhältnis zwischen 1:6,25 bis 6,25:1 enthält.

4. Mittel nach Anspruch 3, dadurch gekennzeichnet, dass es die Komponenten (1) und (2) in einem Gewichtsverhältnis im Bereich von 1:2,3 bis 3,6:1 enthält.

5. Mittel nach einem der Ansprüche 1–4, dadurch gekennzeichnet, dass das Verhältnis der darin enthaltenen Menge des als Komponente (3) verwendeten Mineralöls, ausgedrückt in Litern, zum in Kilogramm ausgedrückten Gesamtgewicht der Komponenten (1) und (2) im Bereich zwischen 1 und 3,5 liegt.

6. Verwendung des Mittels nach Anspruch 1 zum sogenannten Abbrennen von Kartoffelstauden, dadurch gekennzeichnet, dass es in solcher Menge mit Wasser verdünnt und so auf die zu behandelnde Kartoffelkultur versprüht wird, dass pro Hektar 0,4 bis 2,5 kg Komponente (1), 0,4 bis 2,5 kg Komponente (2) und 2 bis 4 Liter der als Komponente (3) dienenden Mineralöls ausgebracht werden.

7. Verwendung nach Anspruch 6, dadurch gekennzeichnet, dass die einzusetzende Menge so gewählt wird, dass pro Hektar Kulturfläche 0,44 bis 1,8 kg Komponente (1), 0,5 bis 1,0 kg Komponente (2) und 2,8 bis 3,2 Liter Komponente (3) ausgebracht werden.

**Claims**

1. Composition for defoliation of crop plants, characterized by comprising as constituents (1) methyl-5-(2,4-dichlorophenoxy)-2-nitrobenzoate and (2) 3-(3,4-dichlorophenyl)-1-methoxy-1-methyl urea in combination with (3) a mineral oil.

2. Composition according to claim 1, characterized by comprising at least one emulsifying agent as adjuvant.

3. Composition according to claim 1 or 2, characterized by comprising the constituents (1) and (2) in a weight ratio of from 1:6.25 to 6.25:1.

4. Composition according to claim 3, characterized by comprising the constituents (1) and (2) in a weight ratio of from 1:2.3 to 3.6:1.

5. Composition according to any of claims 1–4, characterized in that the ratio of the amount of constituent (3) contained therein, expressed in liters, to the total weight of constituents (1) and (2), expressed in kilograms, is in the range of from 1 to 3.5.

6. Use of the composition of claim 1 for desiccation of potato plants, characterized in that it is diluted with such an amount of water and is sprayed onto the potato crop that is to be treated such that 0.4 to 2.5 kg of constituent (1), 0.4 to 2.5 kg of constituent (2) and 2 to 4 liters of the mineral oil that serves as constituent (3) are applied per hectare.

7. Use according to claim 6, characterized in that the amount applied is selected such that 0.44 to 1.8 kg of constituent (1), 0.5 to 1.0 kg of constituent (2) and 2.8 to 3.2 liters of constituent (3) are applied per hectare of crop area.

**Revendications**

1. Produit pour défolier des plantes cultivées, produit caractérisé en ce qu'il contient: (1) du (dichloro-2,4-phénoxy)-5 nitro-2 benzoate de méthyle et (2) de la (dichloro-3,4-phényl)-3 méthoxy-1 méthyl-1 urée, en association avec: (3) une huile minérale.

2. Produit selon la revendication 1 caractérisé en ce qu'il contient, comme adjuvant, au moins un émulsionnant.

3. Produit selon l'une des revendications 1 et 2, caractérisé en ce qu'il contient les constituants 1 et 2 dans un rapport pondéral compris entre 1:6,25 et 6,25:1.

4. Produit selon la revendication 3, caractérisé en ce qu'il contient les constituants (1) et (2) dans un rapport pondéral situé dans l'intervalle allant de 1:2,3 à 3,6:1.

5. Produit selon l'une quelconque des revendications 1 à 4, caractérisé en ce que, dans ce produit, le rapport entre la quantité de l'huile minérale utilisée comme constituant (3), exprimée en litres, et le poids, exprimé en kilogrammes, des constituants (1) et (2) est situé dans l'intervalle allant de 1 à 3,5.

6. Application du produit selon la revendication 1 pour «brûler», c'est-à-dire provoquer le dessèchement, de touffes de pomme de terre, application caractérisée en ce qu'on dilue le produit avec une quantité appropriée d'eau et en ce qu'on pulvérise la bouillie ainsi obtenue sur la culture de pomme de terre à traiter, de manière à épandre, par hectare, de 0,4 à 2,5 kg du constituant (1), de 0,4 à 2,5 kg du constituant (2) et de 2 à 4 litres de l'huile minérale utilisée comme constituant (3).

7. Application selon la revendication 6, caractérisée en ce qu'on choisit la quantité à appliquer de manière à épandre, par hectare de surface cultivée, de 0,44 à 1,8 kg du constituant (1), de 0,5 à 1,0 kg du constituant (2) et de 2,8 à 3,2 litres du constituant (3).